Europäisches Patentamt

European Patent Office

Office européen des brevets

(19)

(11) Numéro de publication : **0 041 453**
**B1**

(12) FASCICULE DE BREVET EUROPÉEN

(45) Date de publication du fascicule du brevet :
28.08.85

(21) Numéro de dépôt : 81400864.5

(22) Date de dépôt : 27.05.81

(51) Int. Cl.⁴ : **G 21 C 13/02, F 22 B 37/24**

(54) **Dispositif de supportage antisismique d'un appareil baignant dans le bain de métal alcalin liquide entourant un réacteur nucléaire à neutrons rapides.**

(30) Priorité : 02.06.80 FR 8012190

(43) Date de publication de la demande :
09.12.81 Bulletin 81/49

(45) Mention de la délivrance du brevet :
28.08.85 Bulletin 85/35

(84) Etats contractants désignés :
BE DE FR GB IT NL

(56) Documents cités :
FR-A- 2 283 519
FR-A- 2 300 253

(73) Titulaire : STEIN INDUSTRIE Société anonyme dite:
19-21, Avenue Morane Saulnier B.P. 74
F-78141 Velizy-Villacoublay (FR)

(72) Inventeur : Andro, Jean
2, Allée d'Alsace
F-78170 La Celle Saint Cloud (FR)
Inventeur : Marjollet, Jacques
37, Quai de Valmy
F-75010 Paris (FR)

(74) Mandataire : Mongrédien, André et al
c/o BREVATOME 25, rue de Ponthieu
F-75008 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de supportage antisismique d'un appareil sur une dalle surmontant un bain de métal alcalin liquide circulant dans le cœur d'un réacteur nucléaire à neutrons rapides, cet appareil traversant la dalle, baignant dans le métal liquide et comprenant une enveloppe, le dispositif de supportage comprenant une bride support par laquelle ledit appareil s'appuie sur la dalle.

On sait que les appareils verticaux de grande longueur sont supportés par une dalle épaisse, par exemple en béton, qu'ils traversent, lorsqu'il n'est pas possible de les supporter par leur fond, notamment quand il s'agit d'échangeurs entre fluide primaire et fluide secondaire dans des centrales de production d'énergie électrique ou de vapeur à partir de tels réacteurs nucléaires. Un supportage particulier de ce type est connu du document FR-A-2 300 253.

Par ailleurs, on a déjà envisagé dans le document FR-A-2 283 519 de faire reposer la cuve principale d'un réacteur à neutrons rapides sur une partie périphérique de la dalle par l'intermédiaire d'une manchette supportant également la partie centrale de la dalle, afin de réduire les contraintes thermiques.

Il convient que les appareils tels que des échangeurs soient en mesure de résister à des secousses sismiques, du fait des dangers de pollution radioactive qu'entraînerait leur rupture. Toutefois, leur dimensionnement, notamment celui des échangeurs en fonction des flux calorifiques à transmettre, conduit fréquemment à leur donner des diamètres et hauteurs suspendus tels que leurs fréquences propres de vibration soient dans le domaine des fréquences dangereuses des secousses sismiques observées sur le site d'implantation de la centrale dont ils font partie.

La présente invention a pour but de résoudre cette difficulté, et de permettre de donner à de tels appareils des diamètres et hauteurs correspondant au dimensionnement optimal en fonction des caractéristiques techniques à atteindre et des possibilités technologiques de fabrication, tout en leur donnant des fréquences propres de vibration en dehors de la zone des fréquences dangereuses des secousses sismiques dans leur site d'implantation.

Le dispositif de supportage selon l'invention est caractérisé en ce qu'il comprend de plus une manchette reliée à la bride support, une virole de supportage fixée à ladite manchette à un niveau déterminé au-dessus de ladite bride support et fixée à ladite enveloppe de l'appareil à un niveau déterminé, et au moins une pièce située entre ladite manchette et la partie haute de l'enveloppe, afin que ladite manchette et ladite pièce assurent une reprise des déplacements horizontaux de la partie haute de l'enveloppe, tout en autorisant une dilatation différentielle entre la virole et l'enveloppe.

Le choix de trois niveaux de liaison entre l'enveloppe interne, la virole de supportage et la bride d'appui permet d'obtenir une fréquence propre de vibration de l'échangeur en dehors des pics d'accélération dangereux dus aux secousses sismiques dans le site d'implantation de la centrale.

Il est décrit ci-après, à titre d'exemple et en référence aux figures du dessin annexé, un dispositif de support antisismique d'un échangeur de chaleur entre sodium primaire et sodium secondaire d'une centrale de production d'énergie électrique ou de vapeur à partir d'un réacteur nucléaire à neutrons rapides.

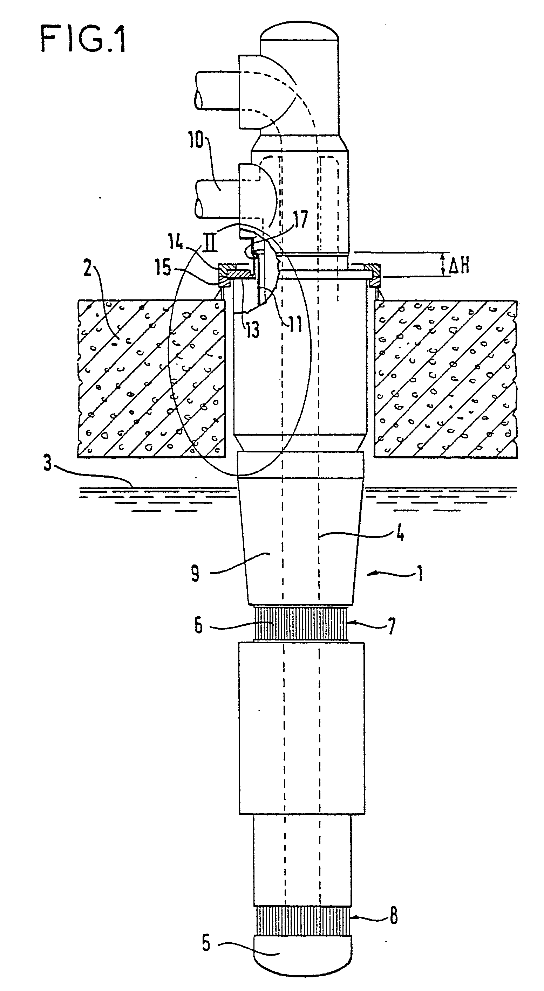

La figure 1 est une vue générale en élévation de l'échangeur.

La figure 2 est une vue à échelle agrandie avec arrachements partiels, notamment du détail II de la figure 1.

L'échangeur 1 est supporté par la dalle 2 surmontant le bain de sodium liquide primaire 3 circulant dans le cœur du réacteur surgénérateur. Il comporte un conduit axial 4 d'introduction de sodium liquide secondaire jusqu'au fond 5 de l'échangeur. De ce dernier, le sodium secondaire remonte dans les tubes de l'échangeur. De ce dernier, le sodium secondaire remonte dans les tubes du faisceau tubulaire 6 en contre-courant du sodium primaire introduit autour des tubes du faisceau par l'ouverture annulaire 7 et évacué par l'ouverture annulaire 8. Le sodium secondaire réchauffé remonte par le conduit annulaire 9 jusqu'au conduit d'évacuation vers un système d'échange de chaleur avec un circuit de production de vapeur (non représenté).

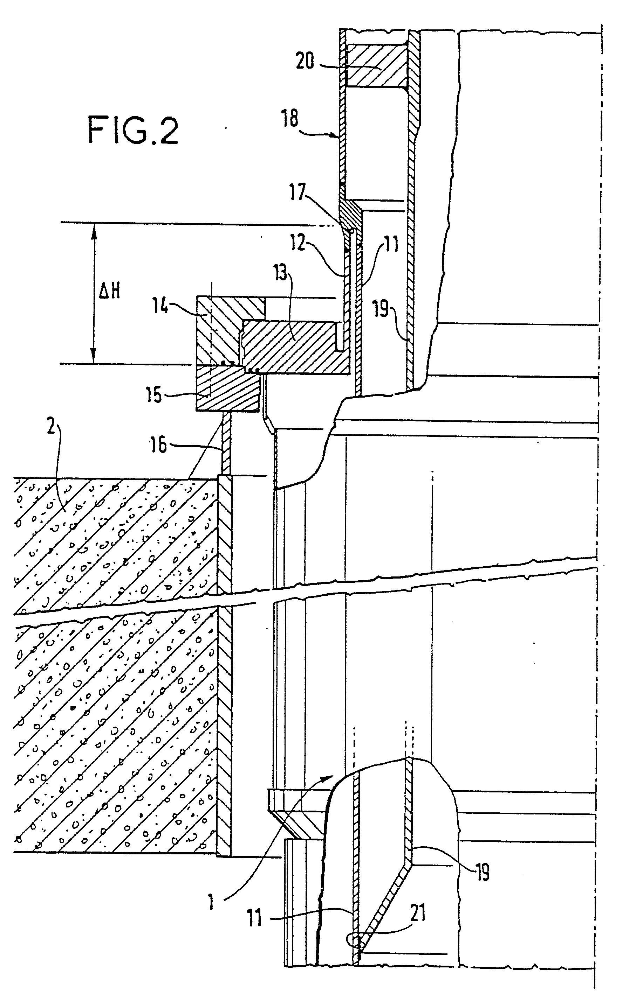

Comme représenté en figure 2, le dispositif conforme à l'invention permet par une manchette (12, 17, 18) d'assurer une reprise des déplacements horizontaux de la partie haute et des tuyauteries associées, par l'intermédiaire de la pièce 20 ne s'opposant cependant pas à une dilatation différentielle de la virole de supportage 11 et de l'enveloppe interne 19, et permet ainsi une dissociation partielle des réponses sismiques de l'échangeur et des tuyauteries associées.

Le choix du niveau de fixation en 17 par une pièce en forme de λ de la virole de supportage 11 sur la manchette à une position distante d'une hauteur ΔH de la bride support 14, 15 permet d'adapter la fréquence de balancement de l'appareil par l'effet de la modification de la rigidité de la virole de supportage. Le choix du niveau de fixation en 21 de la virole de supportage 11 sur l'enveloppe interne 19 permet également d'adapter les fréquences propres.

Bien que le dispositif qui vient d'être décrit en détail en référence aux figures du dessin paraisse préférable, on comprendra que diverses modifications peuvent lui être apportées sans sortir du cadre de l'invention, certains de ses organes pouvant être remplacés par d'autres qui joueraient un rôle technique analogue. En particulier, on pourrait si nécessaire fixer le point de suspension de la hauteur libre de l'échangeur au-dessous du niveau de la surface supérieure de la dalle.

L'invention peut s'appliquer, en-dehors des échangeurs du genre de celui décrit dans l'exemple, à d'autres appareils baignant dans le bain de métal alcalin liquide au-dessus de la dalle de supportage, notamment à des pompes primaires ou à des dispositifs de purification intégrés.

## Revendications

1. Dispositif de supportage antisismique d'un appareil (1) sur une dalle (2) surmontant un bain de métal alcalin liquide (3) circulant dans le cœur d'un réacteur nucléaire à neutrons rapides, ledit appareil (1) traversant la dalle (2), baignant dans le bain de liquide (3) et comprenant une enveloppe (19), le dispositif de supportage comprenant une bride support (13, 14, 15) par laquelle ledit appareil (1) s'appuie sur la dalle (2), ce dispositif étant caractérisé en ce qu'il comprend de plus une manchette (12, 18) reliée à la bride de support, une virole (11) de supportage fixée à ladite manchette à un niveau déterminé (17) au-dessus de ladite bride support (13, 14, 15) et fixée à ladite enveloppe (19) de l'appareil à un niveau déterminé (21), et au moins une pièce (20) située entre ladite manchette (12, 18) et la partie haute de l'enveloppe (19), afin que ladite manchette et ladite pièce assurent une reprise des déplacements horizontaux de la partie haute de l'enveloppe, tout en autorisant une dilatation différentielle entre la virole (11) et l'enveloppe (19).

2. Dispositif selon la revendication 1, caractérisé en ce que la virole (11) de supportage est fixée à l'enveloppe (19) en dessous de la bride support (13, 14, 15).

3. Dispositif selon l'une quelconque des revendications 1 et 2, caractérisé en ce que ladite pièce (20) est située au-dessus du niveau (17) auquel la virole (11) est fixée à la manchette (12, 18).

## Claims

1. Anti-earthquake supporting device for an apparatus (1) on a slab (2) over a bath of liquid alkali metal (3) circulating in the core of a fast neutron reactor, said apparatus (1) passing through the slab (2) and dipping into the liquid bath (3), and comprising a sheath (19), the support device comprising a supporting flange (13, 14, 15) by which said apparatus (1) bears on the slab (2), said device being characterized in that it additionally comprises a shell (12, 18) connected to the support flange, a support sleeve (11) fixed to said shell at a predetermined level (17) above said support flange (13, 14, 15) and fixed to said sheath (19) of the apparatus at a predetermined level (21), and at least one member (20) located between said shell (12, 18) and the upper part of the sheath (19), whereby said shell and said member ensure absorption of horizontal movements of the upper part of the sheath, while permitting differential expansion of the sleeve (11) and the sheath (19).

2. Device according to Claim 1, characterized in that the support sleeve (11) is fixed to the sheath (19) below the support flange (13, 14, 15).

3. Device according to either of Claims 1 and 2, characterized in that said member (20) is located above the level (17) at which the sleeve (11) is fixed to the shell (12, 18).

## Patentansprüche

1. Gegen Erdbeben geschützte Unterstützungsanordnung eines Apparates (1) auf einer Platte (2), die sich erhöht über einem alkalischen Flüssigmetallbad (3) befindet, welches in dem Kern eines Kernreaktors mit schnellen Neutronen umläuft, wobei der Apparat (1) die Platte (2) durchquert, in das Flüssigbad (3) eintaucht und eine Hülle (19) umfaßt und wobei die Unterstützungsanordnung einen Stützflansch (13, 14, 15) aufweist, mit dem sich der Apparat (1) auf der Platte (2) abstützt, dadurch gekennzeichnet, daß die Unterstützungsanordnung ferner umfaßt eine Manschette (12, 18), die mit dem Stützflansch verbunden ist, einen Stützring (11), der an der Manschette auf einer bestimmten Höhe (17) oberhalb des Stützflansches (13, 14, 15) und an der Umhüllung (19) des Apparates auf einer bestimmten Höhe (21) befestigt ist, und wenigstens ein Teil (20), welches sich zwischen der Manschette (12, 18) und dem oberen Abschnitt der Umhüllung (19) befindet, damit die Manschette und das Teil eine Wiederkehr aus der horizontalen Verschiebung des oberen Abschnittes der Umhüllung sicherstellen, wobei aber eine differentielle Ausdehnung ·zwischen dem Ring (11) und der Umhüllung (19) möglich ist.

2. Anordnung nach Anspruch 1, dadurch gekennzeichnet, daß der Stützring (11) an der Umhüllung (19) unterhalb des Stützflansches (13, 14, 15) befestigt ist.

3. Anordnung nach Anspruch 1 oder 2, dadurch gekennzeichnet, daß sich das Teil (20) oberhalb der Höhe (17) befindet, auf der der Ring (11) an der Manschette (12, 18) befestigt ist.

# FIG.1

FIG.2

0 041 453

2